# EUROPEAN PATENT APPLICATION

(11) **EP 1 273 643 A1**
(43) Date of publication of application: **08.01.2003**
(21) Application number: 02014073.7
(22) Date of filing: 01.07.2002
(51) Int. Cl.: C09J 157/00, C09J 133/08, C09J 7/02, C09J 7/04

(54) **Blends of high Tg polymer emulsions and pressure sensitive adhesive polymer emulsions useful as pressure sensitive adhesives**

(30) Priority: 06.07.2001 US 900351
(71) Applicant: Air Products Polymers, L.P., Allentown, PA 18195-1501 (US)
(72) Inventor: Distefano, Frank Vito, Macungie, PA 18062 (US)
(74) Representative: Schwabe - Sandmair - Marx

(57) **Abstract**

A pressure sensitive adhesive with a good balance of adhesive and cohesive properties, produced by blending a high Tg polymer emulsion with an aqueous pressure sensitive adhesive polymer emulsion. The high Tg polymer has a Tg of 30 °C to 300 °C, and a number average particle size (Dn) of 80 to 1000 nm.

## Description

### BACKGROUND OF THE INVENTION

Pressure sensitive adhesives are widely used for making labels, tapes, and for laminating polymeric films such as poly(vinyl chloride) and polyester, for forming decals and other related products.

The term "pressure sensitive" is used to designate adhesives that are aggressively and permanently tacky in dry form at room temperature and firmly adhere to a variety of substrates. Most applications for permanent type pressure sensitive adhesives require excellent peel, tack and shear. Repositionable adhesives may require less tack but they must have sufficient tack and cohesive strength to adhere to a substrate and yet can be removed without a portion of the adhesive adhering to the substrate. These pressure sensitive adhesives should also be resistant to oozing from the substrate when applied to a substrate and placed under pressure as in roll stock. Another requirement of aqueous emulsion pressure sensitive adhesives is the ability to coat them on various adhesive substrates such as Mylar, poly(vinyl chloride) and silicone coated papers, and film release liners.

Pressure sensitive adhesives are derived from copolymers, such as alkyl acrylate and alkyl methacrylate copolymers, that yield soft and tacky polymers having a low glass transition temperature (Tg); by low Tg is meant a Tg of -10 to -90 °C. Homopolymers do not have the properties required for pressure sensitive adhesives; they are therefore modified by copolymerization with at least a small amount of other comonomers to form pressures sensitive adhesives. In addition to the comonomer composition required for pressure sensitive adhesives, a significant amount of low molecular weight copolymer has been found to be important in achieving the adhesive properties needed. Chain transfer agents are typically used during the polymerization process to obtain the desired low molecular weight copolymer fraction.

Attempts to enhance adhesive properties such as adhesion to low density polyethylene or adhesion at sub-ambient temperatures requires a reduction in the modulus and/or Tg of the adhesive. Typically, this will compromise cohesive properties such as shear resistance. Conversely, the addition of higher Tg polymers to improve the cohesion of a soft pressure sensitive adhesive has resulted in a dramatic loss of adhesion.

Combining high and low Tg polymers has been shown to be useful in coatings. For example: J. Y. Cavaillé, et al., "Structural morphology of poly(styrene)-poly(butyl acrylate) polymer-polymer composites studied by dynamic mechanical measurements," *Colloid and Polymer Science,* 1991, Vol. 269, pages 248-258, provides mechanical data on the blend of low Tg poly(butyl acrylate) and higher Tg polystyrene as a film; M. Hidalgo,et al. "Polystyrene(1)/poly(butyl acrylate-methacrylic acid)(2) core-shell emulsion polymers. Part II: Thermomechanical properties of latex films," *Colloid and Polymer Science,* 1992, Vol. 270, pages 1208-1221, provides thermomechanical data on films formed from core shell emulsion polymers containing high and low Tg polymers; and S. Lepizzera, et al., "Film Forming Ability and Mechanical Properties of Coalesced Latex Bends," *Journal of Polymer Science Part B, 1997,* pages 2093-2101, discloses the film forming ability of blends of hard and soft latexes. It has been found that the low Tg polymers reported in these publications do not have the properties needed to use them as pressure sensitive adhesives.

Tackifying resins and plasticizers have been used in the past to improve the adhesion of pressure sensitive adhesives to low surface energy surfaces such as low density polyethylene or polypropylene. However the improvement in adhesion is at the expense of cohesive properties.

EP 0 593231 A1 (1994) discloses the addition of low molecular weight (< 7,000) ethylene oxide-block-propylene oxide copolymers to acrylic pressure sensitive adhesives to improve low temperature adhesion. These additives plasticize the polymer and thus reduce cohesive strength. Because these polyether additives are also water soluble, the water resistance and humidity resistance of the pressure sensitive adhesive are compromised.

Another approach which has been pursued to achieve the requisite balance of cohesion and adhesion in pressure sensitive adhesives has been the incorporation of macromolecular monomers (macromers) during polymerization. U.S. 5,294,668 (1994) discloses pressure sensitive adhesives comprising a blend of a tackifying resin and a graft copolymer of one or more of ethylene and C₃-C₁₈ α-olefins and one or more of macromonomers. The macromonomers are a reaction product of at least one of an ethenylarene and a conjugated diene monomer. Similarly, U.S. 4,732,808 (1988) discloses the incorporation of macromers into a solvent-borne pressure sensitive adhesive to achieve a balance of adhesion and cohesion. Macromers, due to their exceedingly low solubility in water, are generally not suitable for incorporation into polymer emulsions.

### BRIEF SUMMARY OF THE INVENTION

The present invention is directed to a pressure sensitive adhesive with a good balance of adhesive and cohesive properties that is obtained by blending a high Tg polymer emulsion, or dispersion, with an aqueous pressure sensitive polymer emulsion.

The high Tg polymer has a Tg of 30 °C to 300 °C and a number average particle size (Dn) of 80 to 1000 nm. Suitable monomers for making the high Tg polymer may include any vinyl monomer which, when homo- or copolymerized, will meet the Tg requirement; for example, styrene, acrylate esters, methacrylate esters, vinyl chloride, vinyl esters, acrylonitrile, and methacrylamide. The high Tg polymer dispersions may also include those not made by traditional emulsion polymerization processes, such as polymers made by suspension, bulk or solution polymerization which are subsequently dispersed in water. The high Tg polymer may contain up to 20% of a crosslinking monomer.

The pressure sensitive adhesive polymer may contain various combinations of monomer units such as alkyl(meth)acrylates, vinyl esters, chloroprene, butadiene, and isoprene. Pressure sensitive adhesive polymer dispersions may also include those not made by traditional emulsion polymerization processes, such as natural rubber latex, polyurethane dispersions, and polysiloxane dispersions. Other examples are block copolymers such as the styrene-isoprene-styrene or styrene-butadiene-styrene polymer offered by Shell Chemical under the Kraton trademark. The block copolymers may be dissolved in a suitable solvent and dispersed in water with subsequent stripping of the solvent.

The blends are useful in making labels, tapes and other traditional pressure sensitive adhesive constructions. The blends have been found to be particularly useful when used in wet lamination or dry lamination processes in which the blend is coated on siliconized liner and transferred to paper face stock in the manufacture of paper labels.

The present invention provides several advantages over known methods for achieving a balance-between adhesive and cohesive properties of pressure sensitive adhesives. For example it:
- eliminates the need to add plasticizers or tackifier resins to pressure sensitive adhesive emulsions;
- eliminates "bleeding" associated with use of plasticizers in pressure sensitive adhesives;
- provides a simple method of forming an improved pressure sensitive adhesive, without the need for special equipment;
- provides flexibility in tailoring the performance of the pressure sensitive adhesive by merely changing the ratio of high Tg polymer to pressure sensitive adhesive polymer or changing the type of high Tg polymer used in the blend; and
- can be used on difficult-to-bond surfaces.

### DETAILED DESCRIPTION OF THE INVENTION

Emulsion polymerization of ethylenically unsaturated monomers to produce aqueous based pressure sensitive adhesive polymer emulsions is well known. Examples of appropriate monomers that can be used to produce aqueous based pressure sensitive adhesive polymers are: (meth)acrylic acid, C1 to C8 alkyl (meth)acrylate, C1 to C13 hydroxyalkyl(meth)acrylate, di-C1 to C13 alkyl maleate/fumarate, vinyl ester such as vinyl acetate, styrene, butadiene, 2-chloro-1,3-butadiene, and ethylene. The aqueous based pressure sensitive adhesive polymers can also be natural rubber, silicone polymers, polyurethanes, and the like. The pressure sensitive adhesive copolymers are designed to have a Tg of -10 °C to -90 °C, preferably -25 °C to -75 °C and a looptack adhesion value greater than 1 pound per linear inch (pli); preferably greater than 1.5 pli, according to Pressure Sensitive Test Council (PSTC) test method, PSTC-5, tested on stainless steel panel.

The high Tg polymer emulsion, or dispersion, can also be produced by well known emulsion polymerization techniques in which vinyl monomers, including acrylic monomers, are chosen that will produce a polymer or copolymer with a Tg of 30 °C to 300 °C; and a number average particle size (Dn) ranges from 80 to 1000 nm. Suitable monomers include styrene, C1 to C8 alkyl(meth)acrylate, vinyl chloride, vinyl esters such as vinyl acetate, acrylonitrile, methacrylonitrile, and the like. The polymer can also contain 0 to 20 wt% crosslinking monomer. The emulsion polymerization may be conducted in a stage or sequential manner using various combinations of monomers, in order to obtain a polymer or copolymer with an appropriate Tg and number average particle size.

It is also possible to prepare polymer emulsion particles having a first stage core which is below the target Tg and particle size range, provided that a second stage shell polymer, which is within the target Tg range, is then applied to this core and the total particle size, shell plus core, is within the particle size range.

The high Tg polymer dispersions may also include those not made by traditional emulsion polymerization processes, such as polymers made by suspension, bulk or solution polymerization which are subsequently isolated and dispersed in water. In addition, high Tg polymer powders can be dispersed in water for use in this invention.

Polymerization can be initiated by thermal initiators or by a redox system. A thermal initiator is typically used at temperatures at or above about 70 °C and redox systems are preferred at temperatures below about 70 °C. The amount of thermal initiator used in the process is 0.1 to 3 wt%, preferably more than about 0.5 wt%, based on total monomers. Thermal initiators are well known in the emulsion polymer art and include, for example, ammonium persulfate, sodium persulfate, and the like. The amount of oxidizing and reducing agent in the redox system is about 0.1 to 3 wt%. Any suitable redox system known in the art can be used; for example, the reducing agent can be a bisulfite, a sulfoxylate, ascorbic acid, erythorbic acid, and the like. The oxidizing agent can include hydrogen peroxide, organic peroxide such as *t*-butyl peroxide, persulfates, and the like.

Chain transfer agents, well known in the aqueous emulsion polymerization art; are typically used but are not required. Examples include dodecyl mercaptan, mercaptocarboxylic acids, and esters of mercaptocarboxylic acid. The chain transfer agent is added at levels of about 0.01 to 0.5 wt%, preferably 0.02 to 0.15 wt%, based on the weight of monomers.

Effective emulsion polymerization reaction temperatures range from about 50 to about 100 °C; depending on whether the initiator is a thermal or redox system.

In addition to the above reaction conditions and components, the polymer latex may be stabilized with conventional emulsifiers and protective colloids. Examples include any of the known and conventional surfactants and emulsifying agents, principally the nonionic and anionic materials, heretofore employed in the emulsion copolymerization. Among the nonionic surfactants found to provide good results are the Igepal surfactants supplied by Rhone-Poulenc. The Igepal surfactants are members of a series of alkylphenoxy-poly(ethyleneoxy)ethanols having alkyl groups containing from about 7-18 carbon atoms, and having from about 4 to 100 ethyleneoxy units, such as the octylphenoxy poly(ethyleneoxy)ethanols, nonylphenoxy poly(ethyleneoxy)ethanols, and dodecylphenoxy poly(ethyleneoxy)ethanols. Examples of nonionic surfactants include polyoxyalkylene derivatives of hexitol (including sorbitans, sorbides, manitans, and mannides) anhydride, partial long-chain fatty acid esters, such as polyoxyalkylene derivatives of sorbitan monolaurate, sorbitan monopalmitate, sorbitan monostearate, sorbitan tristearate, sorbitan monooleate and sorbitan trioleate.

The high Tg polymer emulsion is blended with the pressure sensitive adhesive polymer emulsion in an amount of 1 to 50 wt%, based on the dry weight of both polymers. It has been found that the required Tg range and particle size range of the high Tg polymer emulsion becomes more restricted as the loading increases. At 1 wt% to approximately 20 wt% of high Tg polymer, the preferred Tg range is 30 °C to 300 °C and the preferred particle size is 80 nm to 1000 nm. At higher levels of high Tg polymer, both the Tg range and the particle size range that will give acceptable performance become narrower. At approximately 20% to 50% level, the preferred Tg is 50 °C to 300 °C and the preferred particle size is 100 to 1000 nm.

The polymer blend may be formulated with tackifying resins and other additives known in the pressure sensitive adhesive art.

The invention will be further clarified by a consideration of the following examples, which are intended to be purely exemplary of the use of the invention.

The test methods used to evaluate the adhesives or coatings in the examples are industry standard tests. They are described in publications of the Pressure Sensitive Tape Council (PSTC), Glenview, Illinois. Products used in the examples are:
Flexcryl® 1624 acrylic copolymer pressure sensitive adhesive latex, Tg = -58 °C.
Flexcryl 1625 acrylic copolymer pressure sensitive adhesive latex, Tg = -48 °C.
Flexcryl 1614 vinyl acetate/dioctylmaleate copolymer pressure sensitive adhesive latex, Tg = -28 °C.
Flexcryl LC-31 tackified acrylic copolymer; Tg -40 °C.
All Flexcryl products supplied by Air Products and Chemicals, Inc.
Vinnolit P70F poly(vinyl chloride) homopolymer resin powder; supplied by Vinnolit Kunststoff GmbH.; Tg = 80 °C.
Dispercoll C74 polychloroprene latex; supplied by Bayer Corp.
Hartex 101 natural rubber latex; supplied by Firestone Polymers Co.
Rovene 9410 styrene/butadiene latex, 25% styrene, Tg = -56 °C; supplied by
Ameripol Synpol Corp.

The following abbreviations are used in the examples:
DDM = dodecylmercaptan; BA = butyl acrylate; EHA = 2-ethylhexyl acrylate;
MAA = methacrylic acid; MMA = methyl methacrylate; PBA = poly(butylacrylate); PBA/MMA = poly(butyl acrylate-methyl methacrylate); PBA/VAc = poly(butyl acrylate-vinyl acetate); PMMA = poly(methyl methacrylate); PMMA/MAA = poly(methyl methacrylate-methacrylic acid); PVC = poly(vinyl chloride); PS = polystyrene; PS/MMA = poly(styrene-methyl methacrylate); PVAc = poly(vinyl acetate).

### EXAMPLE 1

### COMPARISON OF BLENDS OF HIGH AND LOW Tg POLYMERS

Low Tg polymers, reported in the prior art as useful for coatings and adhesives, were prepared and compared to traditional commercial pressure sensitive adhesives. Tests for adhesion, tack, and shear resistance were carried out and the results are reported in Table 1.

**Table 1**

| Coating/Adhesive Latex | Tg, °C | LDPE Peel Adhesion,¹ pli | Looptack,²pli | Shear Resistance,³hrs | Low Temp. Adhesion,⁴pli |
|---|---|---|---|---|---|
| PBA/MMA Lepizzera^{a} | -29 | 0.06 | 0.83 | 14.9 | 0.01 |
| PBA Cavaillé 1991^{b} | -55 | 0.01 | 0.91 | 1.6 | 0.26 |
| Flexcryl 1625 | -55 | 0.7 | 2.8 | 11.5 | 0.90 |
| Flexcryl 1624 | -58 | 0.46 | 2.5 | 0.5 | 1.83 |
| Flexcryl LC-31 | -40 | 0.93 | 2.92 | 0.37 | 1.31 |

| | | | | | |
|---|---|---|---|---|---|
| ¹ PSTC-1, 180 degree peel with 30 min dwell | | | | | |
| ² PSTC-5, tested on stainless steel panel | | | | | |
| ³ PSTC-7, ½ x ½-inch surface with 500 g weight | | | | | |
| ⁴ PSTC-1, 180 degree peel with 30 min dwell performed in 35 °F cold box on corrugated board | | | | | |
| ^{a} S. Lepizzera, et al., "Film Forming Ability and Mechanical Properties of Coalesced Latex Bends," *Journal of Polymer Science Part B,* 1997, pages 2093-2101 | | | | | |
| ^{b} J. Y. Cavaillé, et al., "Structural morphology of poly(styrene)-poly(butyl acrylate) polymer-polymer composites studied by dynamic mechanical measurements," *Colloid and Polymer Science,* 1991, Vol. 269, pages 248-258 | | | | | |

The data in Table 1 demonstrate that although the prior art polymer emulsions (a and b) are within the Tg range of pressure sensitive adhesives, they do not exhibit pressure sensitive adhesive properties. It is believed that the difference in properties between the prior art examples and the commercial pressure sensitive adhesives is due to several factors, some of which are listed below:

With regard to Cavaillé 1991:
- No chain transfer agent was present in the synthesis in order to reduce molecular weight and thus achieve pressure sensitivity.
- Monomer was added to reactor all at once without a monomer delay. This would further increase molecular weight due to the nature of polymerization kinetics.
- The method is not commercially feasible due to excessive exotherm resulting in runaway reaction (note that the run in Cavaillé 1991 was prepared at 10% solids to control exotherm; 10% solids is not a commercially viable solids content).
- Polymerization was carried out at a low temperature (i.e., 70 °C, with potassium persulfate), which would further increase molecular weight beyond the range for pressure sensitive adhesives.
- Polymer was a butyl acrylate homopolymer; in practice, copolymers are needed to achieve balanced pressure sensitive adhesive performance and stability.

With regard to Lepizzera, a Tg of -29 °C is relatively high for a pressure sensitive adhesive polymer and would dictate a significant reduction in molecular weight to counter-balance this effect and achieve pressure sensitivity; however no chain transfer agent was present in the method of synthesis in order to reduce molecular weight and thus achieve pressure sensitivity.

### EXAMPLE 2

### DRY LAMINATION

Pressure sensitive adhesive acrylic latexes were prepared as describe below and blended with a variety of high Tg latexes. Tests for adhesion, tack, and shear resistance were carried out and the results of the tests are presented in Table 2.

High Tg latexes were prepared by methods known in the art and described below. The ratio of the weight average to the number average particle size was typically 1.1-1.2, but latexes of broader polydispersity work equally well. The number average particle size of each latex is given in Table 2.

The pressure sensitive adhesive acrylic latexes A, C, D, E, F, and G were a 98/2 ratio of EHA and MAA. Acrylic latex B was a 90.9/7.3/1.8 ratio of EHA/MMA/MAA. The latexes were prepared by a semi-continuous process employing a seed step and a monomer emulsion delay and containing varying levels of dodecylmercaptan chain transfer agent, in order to control molecular weight of the polymer. The Tg of each of A, C, D, E, F, and G was -60 °C. The Tg of B was -53 ° C. The respective number average particle sizes and chain transfer agent levels are noted in Tables 2 and 3.

### Pressure Sensitive Adhesive Emulsion Polymerization Recipe

Monomer Pre-emulsion
   196 g EHA
   4g MAA
   0.05 - 0.30 g DDM
   80 g deionized water
   14 g Stepan B27 nonylphenolethoxylate sulfate surfactant (30% active)
Initial Reaction Kettle Contents
   200 g deionized water
   0.2 g potassium persulfate

Initial reactor contents were heated to 75 °C while being purged with nitrogen and agitated at 250 rpm. Then 30 g of monomer pre-emulsion (above) was added and the seed formation allowed to proceed. The amount of monomer pre-emulsion and the temperature was varied, as known in the art, to alter the particle size of the seed. After 45 minutes, the temperature was raised to 80 °C and the monomer delay was started to achieve complete addition over a period of 3 hours. An additional 0.2 g of potassium persulfate in 5 ml of water was added. The reaction allowed to proceed for another hour and then cooled.

### High Tg Emulsion Polymerization

Monomer
   230 g styrene
   4.6 g divinylbenzene
Initial Reaction Kettle Contents
   400 g deionized water
   0.15 g potassium persulfate
   6 g Stepan B-27 surfactant (30% active)
Surfactant Delay
   4 g Stepan B27
   100 g deionized water

Initial reactor contents were heated to 75 °C while under nitrogen purge and agitated at 350 rpm. Then 30 g of the styrene monomer mixture were added and the reaction allowed to continue for 45 minutes to generate the seed latex. The temperature was raise to 80 °C and the styrene monomer mixture and surfactant delays started to achieve complete addition over a 3-hour period. The temperature was raised to 85 °C and another 0.15 g of potassium persulfate in 5 ml of water was added and the reaction allowed to proceed for another hour and then cooled. This basic procedure was varied using different monomers and conditions to achieve the range of high Tg latexes of varying particle size discussed below. The particle size was controlled by altering the ratio of the seed monomer to the total monomer used.

The compositions, containing 30 parts high Tg polymer latex and 70 parts acrylic latex (dry ratio), were applied to 2-mil polyethylene terephthalate (PET) film at a coat weight of 24-26 g/m² and dried for 10 minutes at 70 °C, prior to laminating to siliconized paper liner. After aging for 24 hours at 72 °F (22 °C) and 52% relative humidity (RH), the siliconized liner was removed and the coated PET was bonded with a second substrate; i.e., low density polyethylene (LDPE), stainless steel, and corrugated board. The results of adhesion and cohesion tests are present in Table 2.

**Table 2**

| 70 Parts Acrylic Latex to 30 Parts High Tg Latex Additive (Dry Ratio) | | | | | | | |
|---|---|---|---|---|---|---|---|
| Run # | Tg of Additive, °C | Additive Polymer Type | Particle Size, nm | LDPE Peel Adhesion (1), pli | Looptack (2), pli | Shear Resistance(3), hrs | Low Temp. Adhesion (4), pli |
| ACRYLIC LATEX A SERIES 585 ppm DDM Dn=236 nm | | | | | | | |
| 1 | none | | | 0.66 | 2.62 | 0.20 | 1.37 |
| 2 | 110 | PMMA | 211 | 0.97 | 2.28 | 1.62 | 0.39 |
| 3 | 110 | PMMA | 164 | 1.48 | 2.22 | 3.0 | 0.25 |
| 4 | 110 | PMMA | 155 | 1.33 | 2.81 | 2.7 | 0.30 |
| 5 | 110 | PMMA/MAA | 143 | 1.44 | 2.16 | 3.32 | 0.25 |
| 6 | 110 | PMMA | 135 | 1.61 | 2.44 | 10.44 | 0.14 |
| 7 | 110 | PMMA | 109 | 1.78 | 2.70 | 12.86 | 0.11 |
| 8 | 105 | PS | 134 | 0.96 | 1.67 | 4.24 | 30% fiber pick |
| 9 | 39 | PBA/MMA | 109 | 0.07 | 0.98 | 0.45 | 0 |
| 10 | 38 | PBA/MMA | 180 | 0.14 | 0.71 | 0.63 | 0 |
| ACRYLIC LATEX SERIES B (90.9/7.3/1.8 EHA/MMA/MAA) 573 ppm DDM Dn=123 nm | | | | | | | |
| 11 | none | | | 0.86 | 2.4 | 0.28 | 1.28 |
| 12 | 110 | PMMA | 135 | 0.98 | 1.96 | 9.60 | 0.15 |
| 13 | 110 | PMMA | 76 | 0.98 | 1.71 | 29.9 | 0 |
| 14 | 110 | PMMA | 91 | 0.51 | 1.72 | 39.3 | 0.02 |
| 15 | 39 | PBA/MMA | 109 | 0.13 | 0.80 | 9.1 | 0 |
| ACRYLIC LATEX C SERIES 1463 ppm DDM Dn=134 nm | | | | | | | |
| 16 | none | | | 1.0 | 3.5 | 0.05 | 2.2 |
| 17 | 110 | PMMA | 155 | 1.42 | | 0.14 | 0.57 |
| 18 | 110 | PMMA | 211 | 1.16 | | 0.09 | 0.87 |
| 19 | 78 | PVC | 201 | 0.63 | 1.82 | 0.10 | 0.67 |
| 20 | 18 | PBA/VAc | 250 | 0.02 | | | 0 |
| 21 | 40 | PVAc | 164 | 0.03 | | | 0 |
| ACRYLIC LATEX D SERIES 1024 ppm DDM Dn=142 | | | | | | | |
| 22 | none | | | 0.5 | 2.42 | 0.09 | 1.58 |
| 23 | 110 | PMMA | 211 | 0.71 | 3.31 | 0.51 | 0.23 |
| 24 (tackifier)(5) | 110 | PMMA | 211 | 1.21 | 3.06 | 0.6 | 0.36 |
| 25 | 78 | PVC | 201 | 0.48 | 1.55 | 0.38 | 0.89 |

| | | | | | | | |
|---|---|---|---|---|---|---|---|
| (1) PSTC-1, 180 degree peel with 30 minutes dwell | | | | | | | |
| (2) PSTC-5, tested on stainless steel panel | | | | | | | |
| (3) PSTC-7, ½ x ½- inch surface with 500 g weight | | | | | | | |
| (4) PSTC-1, 180 degree peel with 30 minutes dwell performed in 35 °F (1.7 °C) cold box on corrugated board | | | | | | | |
| (5) Contained 15 dry wt% mixed rosin/hydrocarbon tackifier having a 85 °C softening point. | | | | | | | |

Runs 2-8 show that the addition of high Tg latexes in the Tg range and particle size range of this invention improves the shear resistance of the acrylic pressure sensitive adhesive latex of Run 1 while still maintaining a bond at low temperature. Runs 2-8 also show a surprising improvement in adhesion to LDPE compared to the control Run 1. As stated above, at an approximate 20 to 50% level of high Tg polymer, to achieve acceptable performance, the preferred Tg range is 50 °C to 300 °C and the preferred particle size range is 100 nm to 1000 nm. Runs 2-8 are within the preferred range; however, it is clear that even within this range low temperature adhesion improves in the upper portion of the range.

Although Runs 9 and 10 show an improvement in shear resistance, there is no bond formed at low temperature and the LDPE adhesion is much lower than that for Runs 1-8. The PBA/MMA copolymers of Runs 9 and 10 are below the Tg range required to provide acceptable performance at a 30% level of high Tg polymer level.

It is completely counterintuitive and unexpected that a higher Tg latex additive would perform better than a lower Tg latex additive, given that a requisite for pressure sensitivity is that the polymer has a low Tg.

Run 12 shows the effect of addition of a high Tg latex of the invention to the low Tg pressure sensitive adhesive latex of Run 11. Again, the shear resistance was improved while still maintaining a low temperature bond and good LDPE adhesion.

Although Runs 13 and 14 are within the desired Tg range, they are below the minimum particle size necessary to yield good performance at the 30% level of high Tg polymer. Runs 13 and 14 retain LDPE adhesion but do not form a low temperature bond.

Run 15 used a PBA/MMA latex with a Tg below the necessary range at the 30% addition level. LDPE adhesion was compromised and there was no low temperature bond.

Runs 17-19 used high Tg latexes within the desired Tg and particle size ranges for the 30% addition level. These show shear improvement relative to Run 16 with good low density polyethylene (LDPE) adhesion and bonds at low temperature.

Runs 20 and 21 are below the required Tg range for the 30% addition level, and have very poor LDPE adhesion and no low temperature bond.

Runs 23-25 show the use of high Tg latexes within the desired Tg and particle size ranges for the 30% addition level in combination with the pressure sensitive adhesive latex of Run 22. Once again, there is an improvement in shear resistance with good LDPE adhesion while still maintaining a bond at low temperature.

Run 24 shows that the blends are amenable to addition of tackifier resin. Whereas tackifier addition is known in the art to reduce shear resistance, Run 24 shows that it is retained or slightly improved when used in conjunction with the current invention.

### EXAMPLE 3

### USE OF LOWER LEVELS OF HIGH Tg POLYMER

Compositions, containing 17.5 parts high Tg latex and 82.5 parts acrylic latex or 15 parts high Tg latex and 85 parts acrylic latex, were applied to 2-mil polyethylene terephthalate (PET) film at a coat weight of 24-26 g/m² and dried for 10 min at 70 °C, prior to laminating to siliconized paper liner. After aging for 24 hours at 72 °F (22 °C)and 52% RH, the siliconized liner was removed and the coated PET was bonded with a second substrate; i.e., low density polyethylene (LDPE), stainless steel, and corrugated board. The results of adhesion and cohesion tests are present in Tables 3 and 4.

**Table 3**

| 17.5 Parts High Tg Additive Latex Blended with 82.5 Parts Acrylic Latex | | | | | | | |
|---|---|---|---|---|---|---|---|
| Run # | Tg of Additive, °C | Additive Polymer Type | Particle Size, nm | LDPE Peel Adhesion (1), pli | Looptack (2), pli | Shear Resistance (3A), hrs | Low Temp. Adhesion (4), pli |
| ACRYLIC LATEX E SERIES 1024 ppm DDM Dn=219 nm | | | | | | | |
| 26 | none | | | 0.97 | 2.31 | 0.32 | 1.81 |
| 27 | 105 | PS/MMA | 80 | 1.36 | | 4.17 | 1.36 |
| 28 | 105 | PS/MMA | 179 | 0.71 | | 1.48 | 1.21 |
| 29 | 39 | PBA/MMA | 109 | 0.24 | 1.68 | 6.14 | 0.40 |
| 30 | 38 | PBA/MMA | 180 | 0.54 | 2.31 | 2.3 | 0.85 |
| ACRYLIC LATEX F SERIES 1024 ppm DDM Dn=149 nm | | | | | | | |
| 31 | none | | | 1.39 | 2.92 | 0.27 | 2.06 |
| 32 | 105 | PS/MMA | 80 | 1.51 | | 1.45 | 1.51 |
| 33 | 105 | PS/MMA | 179 | 0.82 | | 0.90 | 1.38 |
| ACRYLIC LATEX G SERIES 1024 ppm DDM Dn=94.7 nm | | | | | | | |
| 34 | none | | | 0.99 | 2.37 | 0.33 | 2.14 |
| 35 | 105 | PS/MMA | 80 | 1.35 | | 0.80 | 0.96 |
| 36 | 105 | PS/MMA | 179 | 0.90 | | 0.66 | 1.14 |

| | | | | | | | |
|---|---|---|---|---|---|---|---|
| (1) Pressure Sensitive Tape Council (PSTC) test method PSTC-1, 180 degree peel with 30 min dwell | | | | | | | |
| (2) PSTC-5, tested on stainless steel panel | | | | | | | |
| (3A) PSTC-7, 1x1-inch surface with 1000 g weight | | | | | | | |
| (4) PSTC-1, 180 degree peel with 30 min dwell performed in 35 °F cold box on corrugated board | | | | | | | |

Note that the shear resistance test (3A) used in Table 3 is less severe than the test (3) used in Table 2, hence the higher values. Comparisons between the neat acrylic latex and that containing the high Tg polymer are equally valid with either shear resistance test. Results in Table 3 show how the acceptable range of Tg and particle size is broadened when the high Tg polymer is used at a 17.5% level instead of the 30% level of Table 2. As stated above, when the level of high Tg polymer is approximately 1% to 20%, the acceptable Tg range becomes 30 to 300 °C and the acceptable particle size becomes 80 nm to 1000 nm.

Run 27 which has particle size of 80 nm and a Tg of 105 °C gives very acceptable low temperature performance at the 17.5% level compared to the lack of low temperature adhesion exhibited by Runs 13 and 14 (Table 2) which are of comparable particle size and Tg but at a 30% level.

Runs 29 and 30 show that acceptable low temperature adhesion can be achieved at a Tg of 38-39 °C, if the level of high Tg polymer is 17.5%. The same two high Tg polymers did not exhibit low temperature adhesion when employed at the 30% level (Runs 9 and 10, Table 2). It should also be noted that although the Tg range which gives acceptable performance is broader at the lower level of high Tg polymer, the polymers with a Tg of 105 °C still provide a significant advantage over those with a Tg of 38-39 °C, even at the 17.5% level. Runs 31-36 corroborate these conclusions.

**Table 4**

| 15 Parts High Tg Additive Latex Blended with 85 Parts Acrylic Latex | | | | | | | |
|---|---|---|---|---|---|---|---|
| Run # | Tg of Additive, C | Additive Polymer Type | Particle Size, nm | LDPE Peel Adhesion (1), pli | Looptack (2), pli | Shear Resistance, hrs | Low Temp. Adhesion (4), pli |
| ACRYLIC LATEX C SERIES 1463 ppm DDM Dn=134 nm | | | | | | | |
| 37 | none | | | 1.0 | 3.5 | 0.05 (3) | 2.2 |
| 38 | 40 | PVAc | 164 | 1.2 | 2.69 | 0.06 (3) | 1.96 |
| 39 | 40 | PVAc | 293 | 0.88 | 2.91 | 0.06 (3) | 2.12 |
| 40 | 38 | PVAc | 191 | 0.9 | 3.29 | 0.09 (3) | 1.94 |
| | | | | | | | |
| Flexcryl 1624 | | | | | | | |
| 41 | none | | | 0.5 | | 7.2 (3A) | 2.2 |
| 42 | 40 | PVAc | 164 | 1.0 | | 22.9 (3A) | 0.9 |
| 43(6) | 40 | PVAc | 164 | 1.4 | | 17.8 (3A) | 1.1 |

| | | | | | | | |
|---|---|---|---|---|---|---|---|
| (1) Pressure Sensitive Tape Council (PSTC) test method PSTC-1, 180 degree peel with 30 min dwell | | | | | | | |
| (2) PSTC-5, tested on stainless steel panel | | | | | | | |
| (3) PSTC-7, ½ x ½- inch surface with 500 g weight | | | | | | | |
| (3A) PSTC-7, 1x1-inch surface with 1000 g weight | | | | | | | |
| (4) PSTC-1, 180 degree peel with 30 min dwell performed in 35 °F cold box on corrugated board | | | | | | | |
| (6) Contained 15 dry wt% mixed rosin/hydrocarbon tackifier with 85 °C softening point | | | | | | | |

Runs 37-43 of Table 4 show that PVAc polymer emulsions with a Tg of approximately 40 °C can achieve very good low temperature performance at the 15% level whereas this was not possible at the 30% level (compare to Run 21, Table 2).

### EXAMPLE 4

### WET LAMINATION

In this example, the bonded adhesive constructions were formed without drying the adhesive, prior to mating the two surfaces. The blends of high Tg latex with commercial low Tg pressure sensitive adhesive acrylic latex (PSA Component) were coated on polyethylene terephthalate (PET), metalized PET (MPET), or untreated oriented polypropylene (OPP), and immediately laminated to cotton cloth. After aging 24 hours at ambient temperature, the samples were pulled apart in a standard T-peel test. In each case the pressures sensitive adhesive acrylic latex was blended with the high Tg PVC latex of Run 19 (Table 2) at several different ratios. The results are presented in Table 5.

**Table 5**

| Addition of PVC Latex (Tg = 78 °C; particle size = 201 nm) | | | | | | |
|---|---|---|---|---|---|---|
| Run # | PSA Component | Low Tg/High Tg Blend Ratio | T-Peel Adhesion, PET, pli | T-Peel Adhesion, MPET, pli | T-Peel Adhesion, OPP, pli | Shear Resistance, hours |
| 44 | Flexcryl 1624 | 100/0 | 0.20 | 0.35 | 0.08 | 0.56 |
| 45 | | 85/15 | 0.19 | 0.33 | 0.10 | |
| 46 | | 70/30 | 0.23 | 0.31 | 0.11 | 2.07 |
| 47 | Flexcryl 1625 | 100/0 | 0.91 | 1.62 | 0.22 | 8.88 |
| 48 | | 85/15 | 0.75 | 1.18 | 0.29 | |
| 49 | | 70/30 | 0.91 | 0.99 | 0.32 | >50 |
| 50 | | 50/50 | 0.59 | 0.25 | 0.26 | |
| 51 | Flexcryl 1614 | 100/0 | 1.06 | 1.00 | 0.94 | 0.46 |
| 52 | | 70/30 | 0.63 | 0.22 | 0.65 | 7.80 |
| 53 | Tackified Rovene 9410* | 100/0 | 0.22 | 0.72 | 0.16 | |
| 54 | | 70/30 | 0.31 | 0.78 | 0.14 | |
| 55 | Tackified Hartex 101* | 100/0 | 0.06 | 0.03 | 0.08 | |
| 56 | | 70/30 | 0.20 | 0.09 | 0.25 | |
| 57 | Tackified Dispercoll C74* | 100/0 | 0.78 | 0.20 | 0.31 | |
| 58 | | 70/30 | 0.51 | 0.24 | 0.40 | |

| | | | | | | |
|---|---|---|---|---|---|---|
| * Contained 30 dry weight mixed rosin/hydrocarbon tackifier having an 85 °C softening point | | | | | | |

Runs 44-52 demonstrate that the shear resistance of the pressures sensitive adhesive can be substantially increased while maintaining a good balance of adhesion performance, when a high Tg polymer emulsion is added to a pressure sensitive adhesive polymer emulsion. Particularly noteworthy is the fact that adhesion to OPP, which is the most difficult to bond surface, is improved in almost every case.

Runs 53-58 show that the invention can be applied to various polymer chemistries which are known in the pressure sensitive adhesive industry.

### EXAMPLE 5

### DRY POWDER HIGH Tg POLYMER ADDITIVE

A powder of a high Tg PVC was dispersed in water under high shear conditions prior to adding it to Acrylic Latex D; 30 parts of PVC were added per 70 parts of acrylic polymer. The particle size of the high Tg polymer particles were much larger than the high Tg latex polymer particles in Examples 1-3. Adhesion tests were performed, as in Example 1; data is presented in Table 6.

**Table 6**

| Run # | Tg of Additive, °C | Additive Polymer Type | Particle Size, nm | LDPE Peel Adhesion (1), pli | Looptack (2), pli | Shear Resistance (3), hrs | Low Temperature Adhesion (4), Pli |
|---|---|---|---|---|---|---|---|
| Acrylic Latex Series D | | | | | | | |
| 59 | none | | | 0.5 | 2.42 | 0.09 | 1.58 |
| 60 | 78 | Vinnolit P70F, PVC Powder | 1000 | 0.25 | 1.18 | 0.24 | 0.23 |

The data in Table 4 show that addition of PVC powder resulted in an improvement in shear resistance while still retaining a bond at low temperature.

### EXAMPLE 6

### PARTICLE POLYDISPERSITY

This example shows the effect of using a blend of three high Tg polymer latexes with different particle sizes. To 70 parts by weight of Acrylic B was added 10 parts each of polystyrene (PS) having a number average particle size of 91.8, 115.4, and 134.2 nm. Each of the individual components had a polydispersity of 1.1-1.2. The calculated number average particle size of the three-component blend was 113.8 nm. Adhesion tests were carried out as in Example 1 and results are presented in Table 7.

**Table 7**

| Run # | Tg of Additive, °C | Additive Polymer Type | Particle Size, nm | LDPE Peel Adhesion (1), pli | Looptack (2), pli | Shear Resistance (3), hrs |
|---|---|---|---|---|---|---|
| Acrylic Latex Series B | | | | | | |
| 61 | none | | | 0.86 | 2.4 | 0.28 |
| 62 | 105 | Three PS latexes; calculated Dn(blend)= 113.8 | Dn1=91.8 Dn2=115.4 Dn3=134.2 | 0.86 | 1.63 | 13.5 |

The data in Table 7 show that the shear resistance was improved and LDPE peel was maintained.

## Claims

1. A method for enhancing the adhesive properties of aqueous pressure sensitive adhesive polymer emulsions which comprises blending a high Tg polymer emulsion with an aqueous pressure sensitive adhesive polymer emulsion, said high Tg polymer having a Tg of 30 °C to 300 °C and a number average particle size of 80 nm to 1000 nm, to form a pressure sensitive adhesive polymer emulsion blend.

2. The method of claim 1 wherein said high Tg polymer is blended in an amount of 1 wt% to 50 wt%, based on the total dry weight of said high Tg polymer and said pressure sensitive adhesive polymer.

3. The method of claim 1 wherein said aqueous pressures sensitive adhesive polymer emulsion is an acrylic polymer emulsion.

4. The method of claim 1 wherein said high Tg polymer has an average particle size of 80 nm to 1000 nm and a Tg of 30 °C to 300 °C and is blended in an amount of 1 wt% to 20 wt%, based on the total dry weight of said high Tg polymer and said pressure sensitive adhesive polymer.

5. The method of claim 1 wherein said high Tg polymer has an average particle size of 100 nm to 1000 nm and a Tg of 50 °C to 300 °C and is blended in an amount of 20 wt% to 50 wt%, based on the total dry weight of said high Tg polymer and said pressure sensitive adhesive polymer.

6. The method of claim 1 wherein said high Tg polymer emulsion is formed by emulsion polymerization of one or more monomers selected from the group consisting of styrene, a C1 to C8 alkyl acrylate, C1 to C8 alkyl methacrylate, vinyl chloride, vinyl acetate, acrylonitrile, and methacrylonitrile.

7. The method of claim 1 wherein said high Tg emulsion polymer is selected from poly(methyl methacrylate), poly(methyl methacrylate-methacrylic acid), polystyrene, poly(styrene-methyl methacrylate), poly(butyl acrylate-methyl methacrylate), poly(vinyl acetate), or poly(vinyl chloride).

8. An aqueous based pressure sensitive adhesive emulsion blend comprising an aqueous pressure sensitive adhesive polymer emulsion and a high Tg polymer emulsion, said high Tg polymer having a Tg of 30 °C to 300 °C and a number average particle size of 80 nm to 1000 nm.

9. The blend of claim 8 wherein the dry weight of said high Tg polymer emulsion in said blend is 1 wt% to 50 wt%, based on the total dry weight of said pressure sensitive adhesive emulsion polymer and said high Tg emulsion polymer.

10. The blend of claim 8 wherein said high Tg polymer has an average particle size of 80 nm to 1000 nm and a Tg of 30 °C to 300 °C and is blended in an amount of 1 wt% to 20 wt%, based on the total dry weight of said high Tg polymer and said pressure sensitive adhesive polymer.

11. The blend of claim 8 wherein said high Tg polymer has an average particle size of 100 nm to 1000 nm and a Tg of 50 °C to 300 °C and is blended in an amount of 20 wt% to 50 wt%, based on the total dry weight of said high Tg polymer and said pressure sensitive adhesive polymer.

12. The blend of claim 8 wherein said high Tg polymer emulsion is formed by emulsion polymerization of one or more monomers selected from the group consisting of styrene, a C1 to C8 alkyl acrylate, C1 to C8 alkyl methacrylate, vinyl chloride, vinyl acetate, acrylonitrile, and methacrylonitrile.

13. The blend of claim 8 wherein said high Tg emulsion polymer is selected from poly(methyl methacrylate), poly(methyl methacrylate-methacrylic acid), polystyrene, poly(styrene-methyl methacrylate), poly(butyl acrylate-methyl methacrylate), poly(vinyl acetate), or poly(vinyl chloride).

14. A pressure sensitive paper label containing a blend of claim 8 applied to a surface of said label.

15. A siliconized release liner containing a blend of claim 8 applied to a surface of said liner.

16. A difficult to bond substrate containing a blend of claim 8 applied to a surface of said substrate.
